(19) Europäisches Patentamt
European Patent Office
Office européen des brevets

(11) EP 0 675 344 B1

## (12) EUROPÄISCHE PATENTSCHRIFT

(45) Veröffentlichungstag und Bekanntmachung des Hinweises auf die Patenterteilung:
27.10.1999 Patentblatt 1999/43

(51) Int Cl.⁶: **G01F 23/24**

(21) Anmeldenummer: 95100329.2

(22) Anmeldetag: 12.01.1995

(54) **Füllstandssensor**

Level indicator

Détecteur de niveau

(84) Benannte Vertragsstaaten:
**DE ES FR GB IT SE**

(30) Priorität: **04.02.1994 DE 4403473**

(43) Veröffentlichungstag der Anmeldung:
**04.10.1995 Patentblatt 1995/40**

(73) Patentinhaber: **Mannesmann VDO AG**
**60326 Frankfurt (DE)**

(72) Erfinder: **Wallrafen, Werner**
**D-65719 Hofheim (DE)**

(74) Vertreter: **Klein, Thomas, Dipl.-Ing.**
**Kruppstrasse 105**
**60388 Frankfurt (DE)**

(56) Entgegenhaltungen:
EP-A- 0 340 309          WO-A-91/14926
DE-A- 2 120 290          DE-A- 3 209 780
FR-A- 2 143 946

• NTIS TECH NOTES, 1.Okfober 1990 Seiten 851, 1-02, XP 000171454 'AUTOMATIC REFILLING SYSTEM FOR LIQUID HELIUM'

**Beschreibung**

Die Erfindung betrifft einen Füllstandssensor, insbesondere zur Messung von Flüssigkeitsvorräten in Kraftfahrzeugen.

Zur Füllstandsmessung, insbesondere in Kraftstoffbehältern, sind verschiedene Anordnungen und Systeme bekannt. So werden beispielsweise bei sogenannten elektrothermischen Füllstandssensoren auf Folien aufgebrachte Leiterbahnen mit temperaturabhängigem Widerstand kurzzeitig mit einem Strom beaufschlagt. Aus dem durch die Erwärmung bedingten Widerstandsanstieg wird dann darauf geschlossen, wie weit die Leiterbahn mit Flüssigkeit bedeckt ist. Die somit abgeleitete, dem Füllstand analoge elektrische Größe kann über eine aufwendige Auswerteschaltung einem Anzeigeinstrument oder einer digitalen Anzeige zugeführt werden.

Die Folie, welche die Leiterbahnen trägt, ist dabei in einem entsprechend geformten Halter senkrecht im Kraftstoffbehälter angeordnet und erstreckt sich über den gesamten Füllstandsbereich.

Durch verschiedene Einflüsse, wie beispielsweise Toleranzen und Alterung der Folie und der Zusammensetzung der zu messenden Flüssigkeit, verändert sich die Kennlinie eines derartigen Füllstandssensors mit der Zeit. Außerdem ist nach der Herstellung ein Abgleich erforderlich, um Toleranzen auszugleichen.

Einen erstmaligen Abgleich sowie nachfolgende Kompensationsverfahren erfolgen bei einem bekannten System dieser Art (DE 36 01 100 A1) während des Betriebs bzw. beim Füllen des Tanks dadurch, daß ferner eine Digitalsonde, welche Meßwerte liefert, die sich sprungartig mit dem Füllstand ändern, angeordnet ist, daß aus einem Vergleich der Meßwerte der Digitalsonde und der Analogsonde Korrekturwerte abgeleitet werden und daß die Meßwerte der Analogsonde mit Hilfe der Korrekturwerte korrigiert und angezeigt werden. Es ist jedoch auch bei diesem bekannten System eine elektronische Auswerteschaltung in unmittelbarer Nähe der Sonde erforderlich. Eine solche Auswerteschaltung bedeutet einen erheblichen Aufwand. Außerdem erfolgt eine Eichung nur dann, wenn der Füllstand vorgegebene Werte erreicht.

Aus der DE 21 20 290 A1 ist eine Vorrichtung zur Füllstandsanzeige bekannt, welche aus einer Reihe von in unterschiedlichen Höhen angebrachten, je nach Füllhöhe in die Flüssigkeit ein- oder austauchenden Fühlern besteht. Dabei weicht mindestens ein elektrischer Kennwert im eingetauchten von dem im ausgetauchten Zustand ab, wobei der Kennwert der gesamten Fühleranordnung abhängig ist von der Zahl der ein- beziehungsweise ausgetauchten Fühler. Jeder Fühler besteht dabei aus der Kombination von fest- und temperaturabhängigen Widerständen, wobei sich der Gesamtwiderstand aus der Summe der Leitwerte aller Fühlerelemente ergibt.

Ein thermischer Grenzschalter zur Feststellung des Über- beziehungsweise Unterschreitens eines vorbestimmten Füllstandes in einem Flüssigkeitsbehälter ist aus der DE 32 09 780 A1 bekannt. In der Höhe des zu erfassenden Füllstandes ist ein elektrisch beheizter temperaturabhängiger Sensor angeordnet. Eine auf die Heizleistung ansprechende Anordnung liefert dabei ein Signal, wenn die Leistung einen vorbestimmten Schwellwert über- oder unterschreitet, wobei die Änderung dieses Ausgangssignals anzeigt, daß der Füllstand eine bestimmte Höhe überbeziehungsweise unterschritten hat.

Aufgabe der vorliegenden Erfindung ist es, den aus der DE 21 20 290 A1 bekannten Füllstandssensor weiter zu verbessern, der von sich aus genau arbeitet und rein passiv ausgeführt ist.

Diese Aufgabe wird erfindungsgemäß durch die Merkmale des Patentanspruchs 1 gelöst.

Außerdem hat der erfindungsgemäße Füllstandssensor gegenüber mechanisch arbeitenden Füllstandssensoren den Vorteil, daß kein Auftriebskörper benötigt wird, kein Verschleiß auftritt und beliebige Widerstandsbereiche und Kennlinien wählbar sind, wodurch eine Kompatibilität zu den derzeit am meisten verwendeten mechanischen potentiometrischen Füllstandssensoren möglich ist.

Ferner sind die Genauigkeit und die Auflösung grundsätzlich frei wählbar. So kann beispielsweise im Reservebereich eine höhere Auflösung vorgesehen werden. Durch die thermische Trägheit der verwendeten Bauelemente ist eine Dämpfung ohne weitere Maßnahmen gegeben.

Bei dem erfindungsgemäßen Füllstandssensor ist weder eine elektrische noch eine mechanische Justierung erforderlich. Da die Thermistoren im wesentlichen schaltend arbeiten - das heißt, entweder einen sehr geringen oder einen sehr hohen Widerstand aufweisen -, ist der Gesamtwiderstand nahezu nur von den temperaturunabhängigen Widerständen abhängig, die mit engen Toleranzen erhältlich sind. Der Übergang der Widerstandswerte erfolgt jedoch ohne Unstetigkeiten oder Kontaktprellungen wie bei mechanischen Kontakten (beispielsweise Potentiometer-Kontaktschleifer oder Schutzgaskontakte).

Um auch einen definierten Gesamtwiderstand zu erhalten, wenn alle Thermistoren hochohmig sind, ist gemäß einer vorteilhaften Ausgestaltung vorgesehen, daß das letzte (unterste) Widerstandsglied ferner einen temperaturunabhängigen Querwiderstand aufweist.

Eine Verstärkung der Widerstandsänderung beim Eintauchen in eine Flüssigkeit wird gemäß einer anderen Weiterbildung dadurch erzielt, daß die Heizwiderstände einen negativen Temperaturkoeffizienten aufweisen. Außerdem verringern sich dadurch die elektrische Leistungsaufnahme und die Aufheizung des Mediums, je höher der Füllstand ist.

Zur praktischen Realisierung können die Widerstände auf einer Leiterplatte, vorzugsweise einer Epoxid-Leiterplatte, oder auf einer flexiblen Folie angeordnet sein. Dabei werden vorzugsweise Werkstoffe verwendet, welche in dem zu messenden Medium beständig sind.

Bei einer vorteilhaften Ausgestaltung des erfindungsgemäßen Füllstandssensors kann ein Tauchrohr mit einer kleinen Öffnung am unteren Ende zu einer weiteren Dämpfung der Messung dienen.

Durch die in weiteren Unteransprüchen aufgeführten Maßnahmen sind weitere vorteilhafte Weiterbildungen und Verbesserungen der im Hauptanspruch angegebenen Erfindung möglich.

Einige dieser Unteransprüche beziehen sich auf vorteilhafte Realisierungen der Heizwiderstände zusammen mit den Thermistoren. Andere dieser Unteransprüche beziehen sich auf eine Steuerung der zur Heizung dienenden elektrischen Leistung. Dieses ist beispielsweise vorteilhaft, um eine Funktion des erfindungsgemäßen Füllstandssensors innerhalb eines weiten Temperaturbereichs sicherzustellen.

Die Thermistoren können beispielsweise handelsübliche PTC-Elemente aus polykristallinen Keramiken sein, die Kaltwiderstände bei Raumtemperatur im Bereich von 20 $\Omega$ bis 300 $\Omega$ aufweisen. Besonders günstig sind PTC-Elemente auf der Basis kohlenstoffgefüllter leitfähiger Polymere, deren Kaltwiderstände im Bereich von 0,05 $\Omega$ bis 5 $\Omega$ liegen.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1   eine schematische Darstellung eines erfindungsgemäßen Füllstandssensors,

Fig. 2   eine Widerstands-Temperatur-Kennlinie eines Thermistors mit positivem Temperaturkoeffizienten,

Fig. 3   eine Kennlinie des Gesamtwiderstandes in Abhängigkeit vom Füllstand,

Fig. 4   verschiedene Ausgestaltungen der Heizwiderstände und der Thermistoren und

Fig. 5   eine Schaltungsanordnung zu Steuerung der Heizleistung.

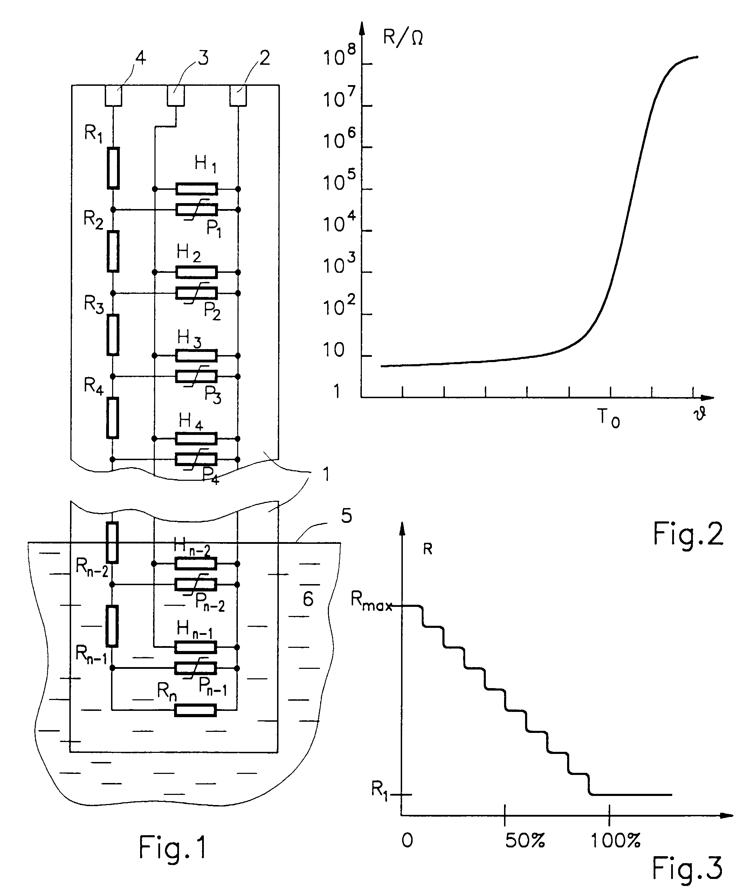

Bei dem in Fig. 1 dargestellten erfindungsgemäßen Füllstandssensor sind alle Teile auf einer streifenförmigen Leiterplatte 1 angeordnet, die unterbrochen gezeichnet ist. Am oberen Ende befinden sich jeweils ein Anschluß 2 für die gemeinsame Masse, ein Anschluß 3 für den Heizstrom und ein Anschluß 4, der als Widerstands-Ausgang des Füllstandssensors dient. Mit dem Signal an diesem Widerstands-Ausgang läßt sich entweder unmittelbar ein elektrisches Meßwerk ansteuern oder es wird über eine einfache Widerstands-Umsetzschaltung in andere analoge oder digitale Größen weiterverarbeitet.

Alle Fest-Widerstände $R_1$ bis $R_n$ sind in Reihe zwischen die Anschlüsse 4 und 2 geschaltet und bilden eine Kette, wobei ein Glied jeweils aus einem der Widerstände $R_1$ bis $R_{n-1}$ und je einem Thermistor $P_1$ bis $P_{n-1}$ gebildet ist. Die Thermistoren werden im folgenden wegen des positiven Temperaturkoeffizienten auch PTC-Elemente genannt. Ein Beispiel für eine Widerstands-Temperatur-Kennlinie eines PTC-Elementes ist in Fig. 2 dargestellt. Bei einer vorgegebenen Temperatur $T_0$ (Kipptemperatur) steigt der Widerstand relativ steil von einem niedrigen Wert von beispielsweise 5 $\Omega$ auf Werte über 10 M$\Omega$. Werden die Widerstände $R_1$ bis $R_n$ zwischen diesen Größenordnungen dimensioniert, beispielsweise im Bereich zwischen 1 k$\Omega$ bis 100 k$\Omega$, so wirken die PTC-Elemente in bezug auf das Verhalten des Gesamtwiderstandes als Schalter, das heißt, die Absolutwerte der Widerstände bei niedrigen und bei hohen Temperaturen wirken sich auf den Gesamtwiderstand praktisch nicht aus und verfälschen nicht das Meßergebnis.

Jedes der PTC-Elemente $P_1$ bis $P_{n-1}$ ist thermisch mit einem Heizwiderstand $H_1$ bis $H_{n-1}$ gekoppelt. Die PTC-Elemente und die Heizwiderstände können jeweils untereinander elektrisch äquivalent ausgeführt sein. Die Wärmeleitung zwischen dem Heizwiderstand und dem PTC-Element sowie zur Umgebung ist mit der Heizleistung derart abgestimmt, daß oberhalb des Flüssigkeitsspiegels 5 die PTC-Elemente eine höhere Temperatur als $T_0$ einnehmen.

Alle PTC-Elemente unterhalb des Flüssigkeitspiegels 5 werden abgekühlt und sind somit kälter als $T_0$. Voraussetzung ist, daß die maximale Temperatur der Flüssigkeit deutlich kleiner als $T_0$ ist. Das jeweils unmittelbar unter dem Flüssigkeitsspiegel liegende PTC-Element verbindet somit die Reihenschaltung aus den darüberliegenden Widerständen mit dem Masseanschluß 2 niederohmig. Je höher der Flüssigkeitsspiegel steigt, desto weniger Widerstände liegen also zwischen den Anschlüssen 2 und 4. Damit ergibt sich die in Fig. 3 dargestellte Kennlinie. Der Gesamtwiderstand $R_{max}$ ergibt sich dabei zu:

$$R_{max} = \sum_{i=1}^{n} R_i$$

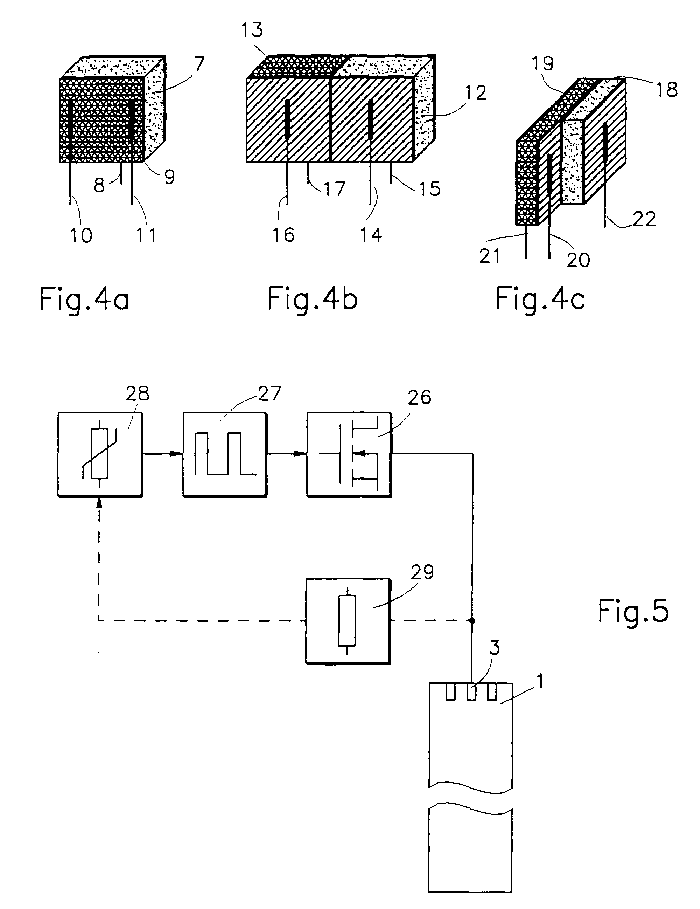

Fig. 4 zeigt verschiedene Möglichkeiten, die Heizwiderstände und die PTC-Elemente thermisch miteinander zu koppeln. Bei dem Ausführungsbeispiel nach Fig. 4a ist ein quaderförmig ausgebildetes PTC-Element 7 mit einer ersten auf der Rückseite liegenden und daher nicht sichtbaren flächigen Kontaktschicht versehen, die mit einem Anschlußdraht 8 verbunden ist. Die zweite Kontaktschicht ist bei dem Ausführungsbeispiel nach Fig. 4a als Heizwiderstand 9 ausgebildet, die mit zwei Anschlußdrähten 10, 11 versehen ist.

Der Heizstrom fließt vom Anschlußdraht 10 planar über die Heizschicht 9 zum Anschlußdraht 11. Diese Anordnung zeichnet sich durch einfachen Aufbau aus. Durch die Spannung zwischen den Anschlußdrähten 10 und 11 wird allerdings das PTC-Element 7 nicht gegen Masse, sondern etwa gegen ein Potential der halben Heizspannung geschaltet. Um jedoch mit der Anordnung nach Fig. 1 den Füllstand zu messen, ist an sich eine Verbindung des PTC-Elementes mit Masse (Anschluß 2, Fig. 1) erforderlich. Dieses kann dadurch erzielt werden, daß der Heizstrom so kurzzeitig während der Messung unterbrochen wird, daß die Heiztemperatur während der Unterbrechung nicht wesentlich fällt. Das Element ist ferner tablettenförmig herstellbar.

Bei dem Ausführungsbeispiel nach Fig. 4b sind ein quaderförmiges PTC-Element 12 und ein ebenfalls quaderförmiger Heizwiderstand 13 derart nebeneinander angeordnet, daß eine thermische Kopplung, nicht jedoch eine galvanische Kopplung erfolgt. Die Anschlüsse 14 und 15 können daher gegenüber den Anschlüssen 16 und 17 potentialfrei belegt werden.

Bei dem Ausführungsbeispiel nach Fig. 4c sind das PTC-Element 18 und der Heizwiderstand 19 mit einem ihrer flächigen Anschlüsse thermisch und galvanisch gekoppelt, so daß ein gemeinsamer Anschlußdraht 20 vorliegt - beispielsweise für den Masseanschluß. Die Heizspannung kann dem Anschlußdraht 21 zugeführt werden, während der Anschlußdraht 22 die Verbindung zum PTC-Element liefert. Eine elektrische Beeinflussung des Meßergebnisses durch die Heizspannung erfolgt hierbei nicht.

Neben den in Fig. 4 gezeigten Möglichkeiten einer thermischen Kopplung zwischen Heizwiderstand und PTC-Element sind auch andere Anordnungen denkbar, beispielsweise die Realisierung der Heizwiderstände als Metallschichten auf dem Trägermaterial der Leiterplatte 1 (Fig. 1). Dabei können die einzelnen Heizwiderstände parallel oder in Reihe geschaltet werden.

Die Komponenten eines Kraftfahrzeugs und damit auch der Füllstandssensor haben in einem weiten Umgebungstemperaturbereich von üblicherweise -40 °C bis +70 °C einwandfrei zu arbeiten. Um sicherzustellen, daß in der Kälte mindestens die Kipptemperatur $T_0$ der PTC-Elemente erreicht wird und bei hohen Umgebungstemperaturen die durch die Heizung erzielte Temperatur nicht so groß wird, daß die Flüssigkeit im Bereich der Heizer vollständig siedet, kann gemäß einer Weiterbildung der Erfindung eine Steuerung oder Regelung des Heizstroms vorgesehen sein.

Ein Ausführungsbeispiel hierfür ist als Blockschaltbild in Fig. 5 dargestellt. Dabei wird die Heizspannung für einen Füllstandssensor 25 mit Hilfe einer Endstufe 26 beeinflußt, die impulsförmig von einem Pulsbreitenmodulator 27 angesteuert wird, wobei das Tastverhältnis proportional zur mittleren Heizspannung ist und vom Ausgangssignal eines Umgebungs-Temperatursensors 28 abhängt.

Bei einem weiteren Ausführungsbeispiel wird neben den Heizwiderständen im Füllstandssensor 25 die gleiche Heizspannung auch einem zusätzlichen Heizwiderstand 29 zugeführt, der als Referenz-Heizwiderstand nicht in die Flüssigkeit eingetaucht ist. Der Temperatursensor 28 steht in wärmeleitendem Kontakt mit dem Heizwiderstand 29.

Es entsteht somit ein Regelkreis, der eine im wesentlichen konstante Temperatur des Heizwiderstandes 29 und damit auch eine konstante Temperatur aller Heizwiderstände $H_1$ bis $H_{n-1}$ (Fig. 1) bewirkt, welche oberhalb des Flüssigkeitsspiegels 5 liegt. Diese Temperatur wird durch entsprechende Dimensionierung des Regelkreises knapp oberhalb der Kipptemperatur $T_0$ (Fig. 2) gewählt, so daß die von der Flüssigkeit bedeckten Heizwiderstände und PTC-Elemente mit Sicherheit auf eine Temperatur unterhalb der Kipptemperatur $T_0$ abgekühlt werden.

Die in Fig. 5 dargestellte Schaltung kann entweder im oberen Teil des Füllstandssensors - auch Füllstandssensorkopf genannt - oder vorzugsweise an anderer Stelle im Kraftfahrzeug, beispielsweise in einem Kombi-Instrument, angeordnet werden. Anstelle einer Regelung der Temperatur eines Referenz-Heizwiderstandes kann auch eine Steuerung in Abhängigkeit von der Außentemperatur vorgesehen sein, wobei der Heizwiderstand 29 entfällt und der Temperatursensor 28 derart ausgebildet ist, daß er auf die Außentemperatur anspricht. Diese Außentemperatursensoren sind häufig schon in Fahrzeugen serienmäßig vorhanden und können daher mitgenutzt werden.

**Patentansprüche**

1. Füllstandssensor, insbesondere zur Messung von Flüssigkeitsvorräten in Kraftfahrzeugen, mit einer Kette aus Widerstandsgliedern (R1, P1 bis Rn-1, Pn-1), die sich über den zu messenden Bereich des Füllstandes erstreckt, wobei jeweils ein Widerstandsglied einen Festwertwiderstand (R1 bis Rn-1) und einen thermisch mit seiner Umgebung gekoppelten Thermistor (P1 bis Pn-1) umfaßt, dessen Widerstand bei einer vorgegebenen Temperatur von einem niedrigen Wert auf einen hohen Wert übergeht, wobei sich der Gesamtwiderstand der Kette um einen Bruchteil seines Maximalwertes ändert, **dadurch gekennzeichnet,** daß die als Längswiderstände über den zu messenden Bereich des Füllstandes ausgebildeten, temperaturunabhängigen Fest-Widerstände (R1 bis Rn-1) in Reihe zwischen einem als Widerstandsausgang dienendem Anschluß (4) und einem Masseanschluß (2) geschaltet sind, wobei die beheizbaren Thermistoren (P1 bis Pn-1) als Querwiderstand zum zu messenden Bereich des Füllstandes ausgebildet sind, und der unmittelbar unter einem Flüssigkeitsspiegel (5) liegende Thermistor (Pn-2) die Reihenschaltung der über dem Flüssigkeitsspiegel (5) liegenden Fest-Widerstände (R1 bis R4) mit dem Masseschluß (2) niederohmig verbindet, wobei der Gesamtwiderstand der Kette durch die Summe der Festwiderstände (R1 bis R4) bestimmbar ist.

2. Füllstandssensor nach Anspruch 1, **dadurch gekennzeichnet,** daß das letzte (unterste) Widerstandsglied ferner einen temperaturunabhängigen Querwiderstand ($R_n$) aufweist.

3. Füllstandssensor nach einem der vorhergehenden Ansprüche, **dadurch gekennzeichnet,** daß die Heizwiderstände ($H_1$ bis $H_{n-1}$) einen negativen Temperaturkoeffizienten aufweisen.

4. Füllstandssensor nach einem der vorhergehenden Ansprüche, **dadurch gekennzeichnet,** daß die Widerstände auf einer Leiterplatte (1) angeordnet sind.

5. Füllstandssensor nach einem der Ansprüche 1 bis 3, **dadurch gekennzeichnet,** daß die Widerstände auf einer flexiblen Folie angeordnet sind.

6. Füllstandssensor nach einem der vorhergehenden Ansprüche, **dadurch gekennzeichnet,** daß die Widerstandskette innerhalb eines Tauchrohres angeordnet ist.

7. Füllstandssensor nach einem der vorhergehenden Ansprüche, **dadurch gekennzeichnet,** daß die Heizwiderstände von direkt auf ein Trägermaterial aufgebrachten Widerstandsschichten gebildet werden.

8. Füllstandssensor nach einem der Ansprüche 1 bis 6, **dadurch gekennzeichnet,** daß die Heizwiderstände von Widerstandsschichten (9) gebildet sind, welche direkt auf die Thermistoren (7) aufgebracht sind.

9. Füllstandssensor nach einem der Ansprüche 1 bis 6, **dadurch gekennzeichnet,** daß die Heizwiderstände von jeweils einem separaten Element (13) gebildet werden, das mit dem zugehörigen Thermistor (12) thermisch gekoppelt und galvanisch getrennt ist.

10. Füllstandssensor nach einem der Ansprüche 1 bis 6, **dadurch gekennzeichnet,** daß die Heizwiderstände aus je einem separaten Element (19) bestehen, das mit dem zugehörigen Thermistor (18) thermisch und galvanisch gekoppelt ist und einen gemeinsamen Anschluß (20) aufweist.

11. Füllstandssensor nach Anspruch 10, **dadurch gekennzeichnet,** daß der Heizwiderstand (19) und der Thermistor (18) quaderförmig oder tablettenförmig sind und mit einer den gemeinsamen Anschluß (20) bildenden Fläche aufeinander liegen und daß eines der Elemente über das andere hinausragt.

12. Füllstandssensor nach einem der vorhergehenden Ansprüche, **dadurch gekennzeichnet,** daß eine den Heizwiderständen zugeführte elektrische Leistung (Strom oder Spannung) steuerbar ist.

13. Füllstandssensor nach Anspruch 12, **dadurch gekennzeichnet,** daß die Leistung in Abhängigkeit von der Umgebungstemperatur steuerbar ist.

14. Füllstandssensor nach Anspruch 12, **dadurch gekennzeichnet,** daß die Leistung in Abhängigkeit von der Temperatur eines Referenzheizelementes (29), das nicht eingetaucht ist, derart geregelt wird, daß die Temperatur des Referenzheizelementes (29) im wesentlichen unabhängig von der Umgebungstemperatur bleibt.

**Claims**

1. Filling level sensor, in particular for measuring supplies of fluids in motor vehicles, having a chain made from resistor elements (R1, P1 to Rn-1, Pn-1) which extends over the region of the filling level to be measured, each resistor element comprising a fixed-value resistor (R1 to Rn-1) and a thermistor (P1 to Pn-1) which is thermally connected to its environment and whose resistance changes from a low value to a high value at a predefined temperature, the overall resistance of the chain changing by a fraction of its maximum value, characterized in that the temperature-independent fixed-value resistors (R1 to Rn-1), which are implemented as longitudinal resistors over the region of the filling level which is to be measured, being connected in series between a terminal (4), serving as resistor output, and an earth terminal (2), the thermistors (P1 to Pn-1) which can be heated being implemented as a shunt resistor with respect to the region of the filling level which is to be measured, and the thermistor (Pn-2) which lies directly below a fluid level (5) forming a low-impedance connection between the earth terminal (2) and the series circuit comprising the fixed-value resistors (R1 to R4) which lie above the fluid level (5), it being possible to determine the overall resistance of the chain by means of the sum of the fixed-value resistors (R1 to R4).

2. Filling level sensor according to Claim 1, characterized in that the last (lowest) resistor element also has a temperature-independent shunt resistor ($R_n$).

3. Filling level sensor according to one of the preceding claims, characterized in that the heating resistors ($H_1$ to $H_{n-1}$) have a negative temperature coefficient.

4. Filling level sensor according to one of the preceding claims, characterized in that the resistors are arranged on a printed circuit board (1).

5. Filling level sensor according to one of Claims 1 to 3, characterized in that the resistors are arranged on a flexible film.

6. Filling level sensor according to one of the preceding claims, characterized in that the resistor chain is arranged within a submersion tube.

7. Filling level sensor according to one of the preceding claims, characterized in that the heating resistors are formed by resistive layers which are applied directly to a carrier material.

8. Filling level sensor according to one of Claims 1 to 6, characterized in that the heating resistors are formed by resistor layers (9) which are applied directly to the thermistors (7).

9. Filling level sensor according to one of Claims 1 to 6, characterized in that the heating resistors are formed in each case by one separate element (13) which is thermally coupled to and electrically isolated from the associated thermistor (12).

10. Filling level sensor according to one of Claims 1 to 6, characterized in that the heating resistors are composed in each case of one separate element (19) which is thermally and galvanically coupled to the associated thermistor (18) and has a common terminal (20).

11. Filling love sensor according to Claim 10, characterized in that the heating resistor (19) and the thermistor (18) are cuboid or tablet-shaped and bear one on the other with a surface which forms the common terminal (20), and in that one of the elements projects beyond the other.

12. Filling level sensor according to one of the preceding claims, characterized in that electric power (current or voltage) which is fed to the heating resistors can be controlled.

13. Filling level sensor according to Claim 12, characterized in that the power can be controlled as a function of the ambient temperature.

14. Filling level sensor according to Claim 12, characterized in that the power is regulated as a function of the temperature of a reference heating element (29) which is not submerged, in such a way that the temperature of the reference heating element (29) remains essentially independent of the ambient temperature.

## Revendications

1. Détecteur de niveau de remplissage, en particulier pour la mesure des réserves de liquide dans des véhicules à moteur, avec une chaîne composée d'éléments de résistance (R1, P1 à Rn-1, Pn-1), qui s'étend sur la région à mesurer du niveau de remplissage, dans laquelle chaque élément de résistance comprend une résistance de valeur fixe (Rl à Rn-1) et un thermistor thermiquement couplé à son milieu ambiant (Pl à Pn-1), dont la résistance à une température prédéterminée passe d'une valeur basse à une valeur élevée, la résistance globale de la chaîne se modifiant d'une fraction de sa valeur maximale, caractérisé en ce que les résistances fixes (R1 à Rn-1), indépendantes de la température, prenant la forme de résistances longitudinales sur la région à mesurer du niveau de remplissage, sont montées en série entre un raccord (4) servant de point de départ des résistances et un raccord de masse (2), les thermistors chauffants (P1 à Pn-1) prenant la forme d'une résistance transversale par rapport à la région à mesurer du niveau de remplissage, et en ce que le thermistor (Pn-2) situé immédiatement sous un niveau de liquide (5) relie, avec une faible résistance, le montage en série des résistances fixes (R1 à R4) situées au-dessus du niveau de liquide (5) avec le raccord de masse (2), la résistance globale de la chaîne pouvant être déterminée par la somme des résistances fixes (R1 à R4).

2. Détecteur de niveau de remplissage suivant la revendication 1, caractérisé en ce que le dernier (le plus bas) élément de résistance présente en outre une résistance transversale ($R_n$) indépendante de la température.

3. Détecteur de niveau de remplissage suivant l'une quelconque des revendications précédentes, caractérisé en ce que les résistances chauffantes ($H_1$ à $H_{n-1}$) présentent un coefficient de température négatif.

4. Détecteur de niveau de remplissage suivant l'une quelconque des revendications précédentes, caractérisé en ce que les résistances sont disposées sur une plaquette de circuits imprimés (1).

5. Détecteur de niveau de remplissage suivant l'une quelconque des revendications 1 à 3, caractérisé en ce que les résistances sont disposées sur une feuille souple.

6. Détecteur de niveau de remplissage suivant l'une quelconque des revendications précédentes, caractérisé en ce que la chaîne de résistances est disposée à l'intérieur d'un tube immergé.

7. Détecteur de niveau de remplissage suivant l'une quelconque des revendications précédentes, caractérisé en ce que les résistances chauffantes sont formées par des couches résistantes déposées directement sur une matière de support.

8. Détecteur de niveau de remplissage suivant l'une quelconque des revendications 1 à 6, caractérisé en ce que les résistances chauffantes sont formées par des couches résistantes (9), qui sont déposées directement sur les thermistors (7).

9. Détecteur de niveau de remplissage suivant l'une quelconque des revendications 1 à 6, caractérisé en ce que les résistances chauffantes sont chacune formées par un élément (13) séparé, qui est thermiquement couplé au thermistor associé (12) et qui en est électriquement séparé.

10. Détecteur de niveau de remplissage suivant l'une quelconque des revendications 1 à 6, caractérisé en ce que les résistances chauffantes se composent chacune d'un élément (19) séparé, qui est thermiquement et électriquement couplé au thermistor associé (18) et qui présente un raccord commun (20).

11. Détecteur de niveau de remplissage suivant la revendication 10, caractérisé en ce que la résistance chauffante (19) et le thermistor (18) ont la forme d'un carré ou d'une tablette et reposent l'un sur l'autre par une face formant le raccord commun (20) et en ce que l'un des éléments se prolonge au-delà de l'autre.

12. Détecteur de niveau de remplissage suivant l'une quelconque des revendications précédentes, caractérisé en ce qu'une puissance électrique (courant ou tension) fournie aux résistances chauffantes est réglable.

13. Détecteur de niveau de remplissage suivant la revendication 12, caractérisé en ce que la puissance est réglable en fonction de la température ambiante.

14. Détecteur de niveau de remplissage suivant la revendication 12, caractérisé en ce que la puissance est réglée en fonction de la température d'un élément chauffant de référence (29), qui n'est pas immergé, d'une façon telle que la température de l'élément chauffant de référence (29) reste essentiellement indépendante de la température ambiante.

Fig.1

Fig.2

Fig.3

Fig.4a

Fig.4b

Fig.4c

Fig.5